# EUROPÄISCHE PATENTSCHRIFT

(11) **EP 0 938 719 B1**
(45) Veröffentlichungstag und Bekanntmachung des Hinweises auf die Patenterteilung: **07.04.2004**
(21) Anmeldenummer: 97948693.3
(22) Anmeldetag: 30.10.1997
(51) Int. Cl.: G06K 9/32, B07C 3/10

(54) **VERFAHREN UND VORRICHTUNG ZUR ERKENNUNG VON VERTEILINFORMATIONEN AUF SENDUNGEN**
METHOD AND DEVICE FOR RECOGNIZING DISTRIBUTION DATA ON POSTAL PACKETS
PROCEDE ET SYSTEME DE RECONNAISSANCE DE L'INFORMATION DE DISTRIBUTION FIGURANT SUR LES ENVOIS

(30) Priorität: 12.11.1996 DE 19646522
(43) Veröffentlichungstag der Anmeldung: 01.09.1999
(73) Patentinhaber: SIEMENS AKTIENGESELLSCHAFT, 80333 München (DE)
(72) Erfinder: SEIDEL, Gert, D-78465 Konstanz (DE); KEIL, Göran, D-12355 Berlin (DE)
(86) Internationale Anmeldenummer: PCT/DE1997/002526
(87) Internationale Veröffentlichungsnummer: WO 1998/021689

(56) Entgegenhaltungen:
- EP-A- 0 589 119
- US-A- 5 311 999
- PATENT ABSTRACTS OF JAPAN vol. 096, no. 008, 30.August 1996 & JP 08 103733 A (TOSHIBA CORP), 23.April 1996,

## Beschreibung

Die Erfindung betrifft die Erkennung von Verteilinformationen auf Sendungen. Im weitesten Sinne bezieht sich die Erfindung auf das Gebiet automatischer Sendungsverarbeitung und insbesondere auf Systeme, bei denen ein automatisches OCR-Adreßleseverfahren durch Videocodierung ergänzt und verbessert wird.

Die optische Zeichenerkennung (OCR) ist eine etablierte Bildverarbeitungsmethode, bei der Bilder mit entsprechender Auflösung aufgenommen werden und maschinenlesbare Zeichen (Buchstaben, Zahlen) daraus bestimmt werden, und findet eine weite Anwendung wie z.B. in der Textverarbeitung, beim Formularlesen und beim automatischen Sortieren von Sendungen.

Systeme zum automatischen Lesen von Adressen (OCR) sind auf dem Gebiet der Briefbearbeitung wohlbekannt und z.B. in der DE 195 31 392 beschrieben. Mit modernen OCR-Briefsortieranlagen sind Bearbeitungsraten von 10 Briefen pro Sekunde, d.h. 36.000 Briefen pro Stunde und mehr erreichbar. Die Erkennungszuverlässigkeit variiert jedoch stark mit der Schriftart und Gesamtqualität der auf die Oberfläche der Briefe aufgebrachten Adreßinformation. Im Falle einer erfolgreichen Erkennung kann der betreffende Brief mit einem maschinenlesbaren Barcode versehen werden. Dieser Barcode erlaubt eine weitere mechanische Bearbeitung bis zu einer beliebigen gewünschten Sortierordnung. Insbesondere ermöglicht die Verwendung von Barcodes eine Sortierung der Sendungen, wie Langbriefe oder kleinen Pakete bis zur Sortierebene des Postgangs, bei der die Sendungen entsprechend der Reihenfolge ihrer Verteilung durch den Zusteller sortiert werden.

Der Bedarf für das Adreßlesen besteht auch bei größeren Paketen, Zeitungen, Zeitschriften.
Obwohl das oben beschriebene Adreßlesen eine bekannte und eingeführte Technik ist, ist deren Anwendung bei der Mehrzahl der Zeitschriften, Zeitungen, Päckchen und Pakete begrenzt infolge von Schwierigkeiten bei der automatischen und zuverlässigen Lokalisation der Adreßgebiete, auch interessierende Gebiete (ROI-Region of Interest) genannt. Die Probleme bei der automatischen ROI-Ermittlung mittels Methoden der Bildverarbeitung bestehen insbesondere bei flachen Sendungen wie Zeitschriften, Zeitungen, Büchern sowie bei Paketen infolge von Hintergrundstörungen oder Störflächen. Dies liegt speziell daran, daß unterschiedliche Adreßaufkleber sich auf

einem Texthintergrund (Zeitungen) oder Grafikhintergrund (Zeitschriften, Magazine, Bücher) befinden. Fehler bei der ROI-Ermittlung sind deshalb so kritisch, weil sie den gesamten weiteren automatischen Prozeß unmöglich machen.

Obwohl komplexe Bildverarbeitungsalgorithmen zur ROI-Ermittlung existieren, so sind nach dem Stand der Technik bei der Umsetzung der ROI-Suche verschiedene manuelle Eingriffe notwendig.
So wird gemäß DE 3943073 ein Brief auf ein Digitalisierungs-Tablett gelegt und an Anschlägen fixiert. Die Eingabe von Abtastkoordinaten für den interessierenden Adreßblock erfolgt mittels Markierungsstift, wobei die Koordinaten der Eckpunkte des Adreßblockes über eine Schnittstelle an den Steuerrechner der Anlage weitergegeben werden. Damit ist vorgesehen, große Sendungsmengen von Großkunden zu verarbeiten, da die Koordinaten nur einmal eingegeben werden müssen. Diese Methode ist für einzelne Sendungen nicht effektiv und für Pakete nicht durchführbar.
In Pattern Recognition volume 23,1990 p. 347-362 "Preprocessing and Presorting of Items for Automatic Sorting using OCR" and EP 0589119 wird die Benutzung von Computerdisplay zur Unterstützung der automatischen ROI-Suche beschrieben.
Dabei sind folgende Nachteile zu verzeichnen:
- Es ist ein spezielles Eingabemittel notwendig, das die Tastatureingabe unterbricht.
- Es ist eine präzise Ortsangabe über das ROI notwendig,
- Auf einem Standard-Computerdisplay können große Bilder von Zeitschriften oder Paketen nicht bearbeitet werden.
- Es fehlt die Integration der ROI-Ermittlung in die vollständige Adreßleselösung einschließlich OCR und Videokodieren.

In Patent Abstracts of Japan, vol. 096, no. 008, 30. August 1996, JP 08 103 733 A (Toshiba Corp.) 23. April 1996, wird ein Verfahren zur Erkennung von Empfängerinformationen auf Sendungen beschrieben, bei dem nach einem misslungenen ersten OCR-Leseversuch das gesamte Abbild der die Empfängerinformation aufweisenden Sendungsoberfläche auf einem Videokodierbildschirm mit einem Gitter dargestellt wird. Die interessierenden Gittergebiete werden dann durch entsprechende Eingabemittel (Tasten oder Maus) ausgewählt und vergrößert und ggf. in der Orientierung gedreht auf dem Bildschirm dargestellt, um anschließend die Videokodierung durchzuführen, was zeitaufwändig ist.

Der Erfindung liegt deshalb das Problem zugrunde, eine Lösung zur schnellen und zuverlässigen Ermittlung von interessierenden Gebieten, insb. Adreßgebieten mit Hilfe der Videokodierung in großen Videobildern der Sendungsoberflächen mit unterschiedlichen Hintergründen zu schaffen, die eine online-Bearbeitung der Sendungen ermöglicht. Zur schnellen Videokodierung sollen neben der Tastatur keine zusätzlichen Eingabemittel notwendig sein.

Erfindungsgemäß wird das Problem durch die in den unabhängigen Ansprüchen angegebene Lehre gelöst.
Vorteilhafte Ausgestaltungen sind in den Unteransprüchen dargestellt.

Befinden sich die Verteilinformationen in großen Bildern mit unterschiedlichen Hintergründen, so ist das automatische Finden dieser Informationen und das anschließende Auswerten ohne Intervention eines Videokodierers in vielen Fällen nicht möglich. Die angegebene Erfindung hat erstmalig den automatischen OCR-Auswerteprozeß einschl. der Suche der die gewünschten Informationen enthaltenen Gebiete (ROI), insbesondere durch die vom Operateur ausgelöste Zoom-Funktion und die Verarbeitung und Darstellung des gezoomten Bildausschnittes bei geringem Eingabeaufwand so mit der Videokodierung gekoppelt, daß die Verarbeitung sehr schnell erfolgt. Dabei erweist sich der in den Unteransprüchen angegebene mehrstufige Videokodier- und OCR-Prozeß als besonders effektiv, damit wird eine online-Bearbeitung der Sendungen erlaubt.
Desweiteren sind bei dieser Lösung keine speziellen und teuren Bildschirme bzw. Workstations notwendig.

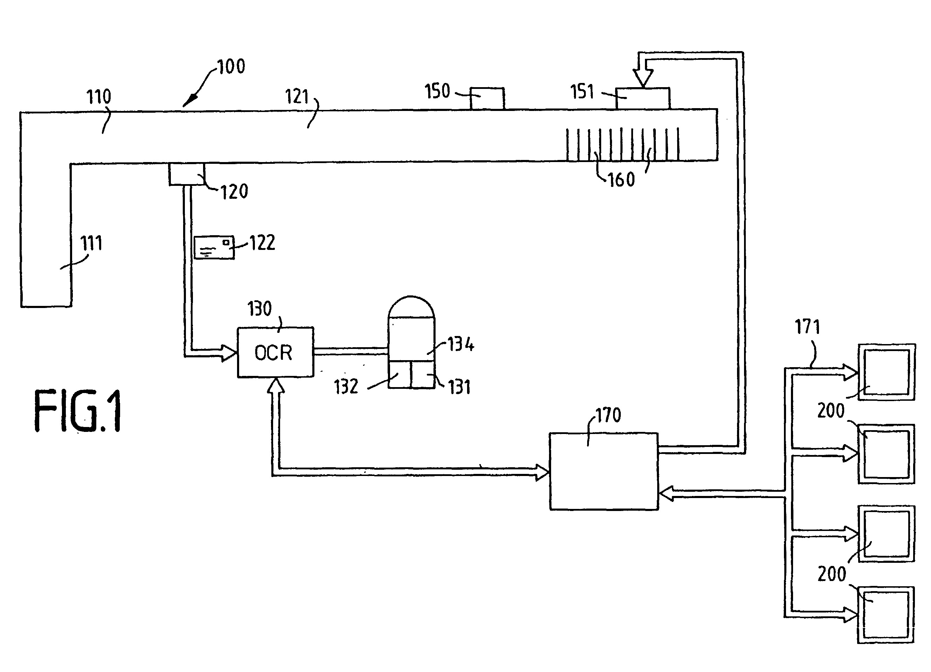

Im weiteren wird die Erfindung anhand eines Ausführungsbeispiels näher erläutert. Dabei zeigen
- Fig. 1: eine schematische Darstellung einer Vorrichtung zur Ausführung des erfindungsgemäßen Verfahrens,
- Fig. 2: ein Flußdiagramm über den Verfahrensablauf,
- Fig. 3: ein Bildschirm-Layout für das Videokodieren.

Gemäß Fig. besteht ein OCR-Paket- oder Päckchen/Zeitschriftensortierer 100 aus einer Zuführung 110, die sukzessive die Sendungen aus einem Magazin 111 holt und zu einem hochauflösenden Videoscanner 120 transportiert. Anschließend werden die Sendungen in einer Verzögerungsstrecke 121 transportiert. Währenddessen erfolgt im OCR-Prozessor 130 eine Auswertung der für die Verteilung benötigten Adressinformationen der Abbilder 122 der Sendungen, die vom Videoscanner 120 gewonnen wurden. Im Fall einer vollständigen Auswertung wird ein Barcodedrucker 150 angesteuert und die Sendung wird mit einem entsprechenden Barcode für die anschließende Sortierung in Sortierfächer 160 versehen. Der OCR-Prozessor 130 besteht aus einem oder mehreren Microprozessoren 131 mit assoziiertem Speicher 132, um Abbilder 122 der Sendungen zu speichern. Weiterhin beinhaltet der OCR-Prozessor ein Adressverzeichnis 134 mit ZI-Codes, Städtenamen und Straßennamen und evtl. weiterer adressbezogener Information.

Die Vorrichtung enthält weiterhin einen Imagecontroller 170 sowie eine Anzahl Videokodierplätze 200, die mit dem Imagecontroller 170 direkt oder durch ein lokales Netzwerk (LAN) 171 verbunden sind. Falls die OCR-Auswertung eines Abbildes nicht erfolgreich war, wird dieses Bild vom OCR-Prozessor 130 zum Imagecontroller 170 transferiert, der einerseits einen TID Barcodedrucker 151 steuert und andererseits das entsprechende Bild zu einem der Videokodierplätze 200 sendet. Der TID Barcodedrucker 151 bringt auf die entsprechende Sendung einen Identifikationscode TID auf, der es zu einem späteren Zeitpunkt ermöglicht, die ausgewertete Adressinformation mit der physikalischen Sendung zu ver knüpfen. Die Auswertung der Abbilder erfolgt in diesem Fall off-line, obwohl vorzugsweise bei einer genügend langen Verzögerungszeit eine on-line-Auswertung mit Videokodierung durchgeführt wird. Im letzteren Fall kann der TID auch zu einem späteren Zeitpunkt, d.h. wenn die Videokodierung innerhalb einer bestimmten vorgegebenen Zeit nicht zu einer vollständigen Auswertung geführt hat, auf die Sendungen aufgebracht werden.

Der Imagecontroller 170 sorgt für den erfindungsgemäßen Ablauf des Verfahrens einschließlich Datenaustausch zwischen OCR-Prozessor 130 und Videokodierplätze 200 und Überlagerung der Bilder auf einem Gitter.

Zur Ausführung des weiteren genauer dargestellten Verfahrens ist der Imagecontroller 170 derart ausgebildet, daß von der Videokodierung nicht vollständig ausgewertete Adreßinformationen unter Verwendung der Ergebnisse der Videokodierung im OCR-Prozessor einer weiteren automatischen Adreßauswertung zugeführt werden.

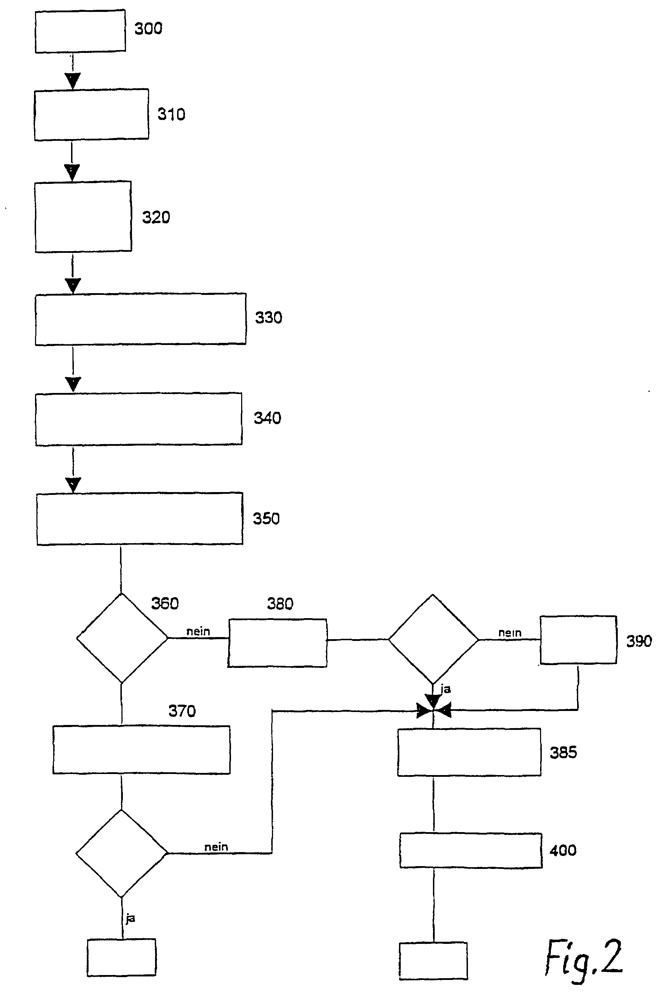

Anhand des Flußdiagramms der Fig. 2 wird der erfindungsgemäße Ablauf anschaulich dargestellt.

Als erstes erfolgt ein automatischer OCR-Erkennungsprozeß 300 im aufgenommenen Bild der die Verteilinformation aufweisenden Sendungsoberfläche. Dabei werden die Schritte: a) Suche des Gebietes mit interessierender Information (ROI), einschließlich der Orientierungsermittlung b) nach erfolgreicher Suche Durchführung des eigentlichen Erkennungsprozesses mit Erkennen der einzelnen Zeichen und danach des Informationsgehaltes durchgeführt. Wird dabei in dem Bild keine Verteilinformation ermittelt und eindeutig erkannt 310, so wird das Bild der gesamten Oberfläche mit einem Gitternetz überlagert auf dem Bildschirm eines Videokodierplatzes dargestellt 320. Dieses Gitter teilt das Bild in mehrere Segmente. Anschließend wird durch den Operateur, durch Eintippen der entsprechenden Segmentnummer, das Segment ausgewählt, das einen Großteil der Verteilinformation (z.B. ein Adreßlabel) beinhaltet 330. Damit die gesamte Verteilinformation vollständig erfaßt wird, werden für einen erneuten OCR-Erkennungsversuch 350 nicht nur das eingegebene Bildsegment, sondern auch noch umgebende Bereiche ausgewertet (340). Bei diesem erneuten Erkennungsversuch wird ebenfalls festgestellt, ob ein interessierendes Gebiet (ROI) vorhanden ist 350, und wenn ja, erfolgt für das ROI-Gebiet der eigentliche Erkennungsprozeß 370. Ist er erfolgreich, so wird der Prozeß abgeschlossen. Bei nicht erfolgreicher Informationsermittlung in diesem zweiten Versuch wird das ausgewertete Gebiet auf dem Bildschirm des Videokodierplatzes dargestellt 380, 385. Wurde vorher das interessierende Gebiet (ROI) ermittelt, so gelangt dieses gleich orientierungskorrigiert auf den Bildschirm 385, ansonsten muß der Operateur bei falscher Orientierung eine Drehung manuell vornehmen 390. Anschließend erfolgt die Videokodierung 400 des interessierenden Gebietes.

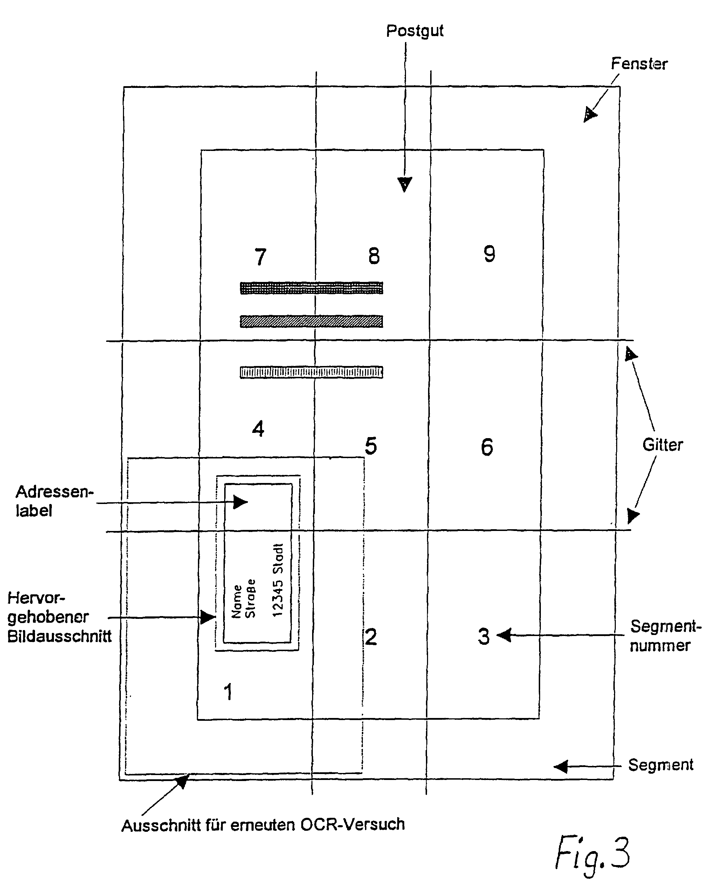

In der Fig. 3 wird das Bildschirm-Layout erläutert.

In dem Bildschirmfenster ist die gesamte Postgutoberfläche mit der Adreßinformation dargestellt. Mit einem Gitter und optional dargestellten Segmentnummern wird die Sendung in Segmente unterteilt. Das Segment mit dem größten Anteil der auszuwertenden Verteilinformation (Empfängernamen und - adresse), in diesem Fall Segment-Nr. 1, wird von dem Operateur ausgewählt. Wurde dieses Gebiet als Adreßlabel beim vorhergehenden OCR-Prozeß ermittelt, so erfolgt bei der Darstellung eine optische Hervorhebung. Zur Bestätigung wird dann vom Operateur ein ○ eingegeben. Wäre die Suche des interessierenden Gebietes bei der automatischen OCR-Auswertung nicht erfolgreich gewesen (keine optische Hervorhebung des Gebietes), müßte der Operateur die Nummer des Segmentes, in diesem Beispiel Nr. 1, eingeben. Bei der anschließenden nochmaligen OCR-Auswertung wird dann ein entsprechender Bildausschnitt bearbeitet, der noch so große Randgebiete neben dem gekennzeichneten Segment beinhaltet, daß das gesamte Adreßlabel enthalten ist.

## Patentansprüche

1. Verfahren zur Erkennung von Verteilinformationen auf Sendungen, wobei ein Abbild der die Verteilinformation aufzuweisenden Oberfläche jeder Sendung gewonnen und mittels automatischer OCR-Erkennungsverfahren (300) einschließlich einer automatischen Suche und Orientierungsermittlung des Gebietes mit der Verteilinformation und Videokodierung mit Darstellung des gesamten Abbildes der die Verteilinformation aufweisenden Oberfläche auf dem durch ein Gitter in Bildsegmente unterteilten Videokodierbildschirm, wenn die automatische OCR-Erkennung kein eindeutiges Ergebnis hat (320), mit den Schritten:
a) Unterteilung des Abbildes auf dem Videokodierbildschirm durch das dargestellte Gitter in Bildsegmente derart, dass das Gitter der Unterteilung des Ziffernblockes der Tastatur entspricht.
b) Manuelle Eingabe des Bildsegmentes, das einen größeren Anteil des gesuchten Gebietes enthält, mittels einer einzigen Betätigung der diesem Gittersegment entsprechenden Taste des Ziffernblockes (330).
c) Nochmalige automatische Suche des Gebietes mit der benötigten Verteilinformation einschließlich Orientierungsermittlung, wobei der neue Suchbereich durch das eingegebene Bildsegment zuzüglich so ausreichend großer Grenzbereiche zu allen Nachbarsegmenten, dass das gesuchte Gebiet mit der Verteilinformation in jedem Fall vollständig enthalten ist, bestimmt ist (340, 350).
d) Automatische OCR-Auswertung des neu gefundenen Bereiches mit der Verteilinformation (370).

2. Verfahren nach Anspruch 1,
bei dem nach nicht eindeutiger automatischer OCR-Auswertung (370) des neu gefundenen Bereiches mit der Verteilinformation nur dieser Bereich vergrößert so auf dem Bildschirm des Videokodierplatzes dargestellt wird, dass die Information orientierungs- und positionskorrigiert unter Verwendung der im OCR-Prozess ermittelten Orientierung und Lokalität ausgerichtet ist und bei dem dann eine Auswertung mittels Videokodierung erfolgt.

3. Verfahren nach Anspruch 1,
bei dem das bei der erstmaligen automatische Suche ermittelte Gebiet mit der Verteilinformation auf dem Bildschirm sichtbar **gekennzeichnet** wird.

4. Verfahren nach Anspruch 1 und 2,
bei dem die Verteilinformation derjenigen Bilder, die bei der Videokodierung nicht eindeutig ausgewertet worden sind, unter Verwendung der Ergebnisse der Videokodierung einer weiteren automatischen OCR-Auswertung zugeführt werden.

5. Verfahren nach Anspruch 1, 2 und 4,
bei dem die Bilder mit den Verteilinformationen Bilder, die bei der weiteren automatischen OCR-Auswertung nicht eindeutig ausgewertet worden sind, einer weiteren Videokodierung zur Auswertung unter Verwendung der Ergebnisse der weiteren automatischen OCR-Auswertung zugeführt wird.

6. Vorrichtung zur Erkennung von Verteilinformationen auf Sendungen, bestehend aus
- einer Vorrichtung zur Gewinnung von Abbildern von Sendungen (120);
- einer Vorrichtung zur automatischen OCR-Auswertung von Verteilinformationen einschließlich einer Verteilinformationssuche (130);
- einer Vorrichtung zur Videokodierung der Verteilinformationen mit mindestens einem Videokodierplatz (200) mit Eingabevorrichtung und Bildschirm;
- einem Imagecontroller (170) zur Erzeugung eines Gitters und überlagerten Darstellung mit dem Abbild der die Verteilinformation enthaltenen Sendungsoberfläche auf dem Bildschirm des Videokodierplatzes, wobei der Imagecontroller folgende Funktionen aufweist:
• Erzeugung des Gitters derart, dass das Gitter der Unterteilung des Ziffernblockes der Tastatur entspricht;
• Erzeugung eines Bildausschnittes, bestehend aus dem Bildsegment, das manuell mittels einer einzigen Betätigung der dem betreffenden Gittersegment entsprechenden Taste eingegeben wurde, und Grenzbereichen zu allen Nachbarsegmenten und Steuerung der Übergabe dieser Bilddaten an die Vorrichtung zur automatischen OCR-Auswertung (130) der Verteilinformationen und bei nicht eindeutiger automatischer Auswertung zur Darstellung des vergrößerten Bildausschnittes auf dem Bildschirm des Videokodierplatzes (200) in orientierungs- und positionskorrigierter Ausrichtung der Information.

7. Vorrichtung nach Anspruch 6,
bei dem der Imagecontroller (170) derart ausgebildet ist, dass von der Videokodierung nicht eindeutig ausgewertete Verteilinformationen unter Verwendung der Ergebnisse der Videokodierung der Vorrichtung zur automatischen OCR-Auswertung (130) zu einer weiteren Auswertung zugeführt werden.

## Claims

1. Method for the recognition of items of distribution information on items of mail, an image of that surface of each item of mail which is to have the distribution information being obtained, and by means of automatic OCR recognition methods (300) including an automatic search and orientation determination of the region with the distribution information and video coding with representation of the entire image of the surface having the distribution information on the video coding screen, which is subdivided into image segments by a grid, if the automatic OCR recognition does not have an unambiguous result (320) having the following steps:
a) subdivision of the image on the video coding screen by the represented grid into image segments in such a way that the grid corresponds to the subdivision of the numeric block of the keyboard.
b) manual inputting of the image segment, containing a relatively large proportion of the region sought, by means of a single actuation of that key of the numeric block which corresponds to this grid segment (330).
c) repeated automatic search for the region with the required distribution information including orientation determination, the new search area being determined by the image segment input plus boundary areas with respect to all the adjacent segments that are sufficiently large that the region sought with the distribution information is always contained in its entirety (340, 350).
d) automatic OCR evaluation of the newly found area with the distribution information (370).

2. Method according to Claim 1,
in which, after non-unambiguous automatic OCR evaluation (370) of the newly found area with the distribution information, only this area is represented in an enlarged manner on the screen of the video coding station such that the information is oriented in an orientation- and position-corrected manner using the orientation and locality determined in the OCR process, and in which an evaluation is then effected by means of video coding.

3. Method according to Claim 1,
in which the region with the distribution information determined during the first automatic search is identified visibly on the screen.

4. Method according to Claims 1 and 2,
in which the distribution information of those images which have not been unambiguously evaluated during the video coding are fed to a further automatic OCR evaluation using the results of the video coding.

5. Method according to Claims 1, 2 and 4,
in which the images with the items of distribution information, images which have not been unambiguously evaluated during the further automatic OCR evaluation, are fed to a further video coding for evaluation using the results of the further automatic OCR evaluation.

6. Apparatus for the recognition of items of distribution information on items of mail, comprising:
- an apparatus for obtaining images of items of mail (120);
- an apparatus for the automatic OCR evaluation of items of distribution information including a distribution information search (130);
- an apparatus for the video coding of the items of distribution information with at least one video coding station (200) with input apparatus and screen;
- an image controller (170) for the generation of a grid and superposed representation with the image of the mail surface containing the distribution information on the screen of the video coding station, the image controller having the following functions:
• generation of the grid in such a way that the grid corresponds to the subdivision of the numeric block of the keyboard;
• generation of an image excerpt, comprising the image segment which has been input manually by means of a single actuation of the key corresponding to the relevant grid segment, and boundary areas with respect to all the adjacent segments and control of the transfer of these image data to the apparatus for the automatic OCR evaluation (130) of the items of distribution information and in the event of non-unambiguous automatic evaluation for the representation of the enlarged image excerpt on the screen of the video coding station (200) with the information being oriented in an orientation- and position-corrected manner.

7. Apparatus according to Claim 6,
in which the image controller (170) is designed in such a way that items of distribution information that have not been unambiguously evaluated by the video coding are fed, using the results of the video coding, to the apparatus for automatic OCR evaluation (130) for a further evaluation.

## Revendications

1. Procédé de reconnaissance d'informations de distribution sur des envois, une image de la surface, qui contient l'information de distribution, de chaque envoi étant obtenue, au moyen de procédés de reconnaissance OCR automatiques (300) y compris une recherche automatique et une détermination d'orientation de la zone qui contient l'information de distribution ainsi qu'un codage vidéo avec présentation de toute l'image de la surface qui contient l'information de distribution sur l'écran de codage vidéo qui est divisé par une grille en segments d'image lorsque la reconnaissance OCR automatique n'a pas donné de résultat univoque (320), avec les étapes :
a) division de l'image sur l'écran de codage vidéo par la grille présentée en segments d'image de telle sorte que la grille correspond à la division du pavé numérique du clavier ;
b) entrée manuelle du segment d'image, qui contient la plus grande partie de la zone recherchée, au moyen d'un seul actionnement de la touche, correspondant à ce segment de grille, du pavé numérique (330) ;
c) nouvelle recherche automatique de la zone qui contient l'information d'adresse nécessaire y compris détermination d'orientation, la nouvelle zone de recherche étant déterminée par le segment d'image entré avec en plus une zone limitrophe suffisamment grande vers tous les segments voisins pour que la zone recherchée qui contient l'information de distribution soit entièrement contenue dans tous les cas (340, 350) ;
d) évaluation OCR automatique de la nouvelle zone trouvée qui contient l'information de distribution (370).

2. Procédé selon la revendication 1, dans lequel, après une évaluation OCR automatique équivoque (370) de la nouvelle zone trouvée qui contient l'information de distribution, on présente seulement cette zone agrandie sur l'écran du poste de codage vidéo de telle sorte que l'information est corrigée en orientation et position en utilisant l'orientation et la localisation déterminées dans le processus OCR et dans lequel on effectue ensuite une évaluation au moyen du codage vidéo.

3. Procédé selon la revendication 1, dans lequel on **caractérise** de manière visible sur l'écran la zone qui contient l'information de distribution et qui a été déterminée lors de la première recherche automatique.

4. Procédé selon les revendications 1 et 2, dans lequel on envoie l'information de distribution des images qui n'ont pas été évaluées sans équivoque lors du codage vidéo, en utilisant les résultats du codage vidéo, à une évaluation OCR automatique supplémentaire.

5. Procédé selon les revendications 1, 2 et 4, dans lequel on envoie les images qui contiennent les informations de distribution et qui n'ont pas été évaluées sans équivoque lors de l'évaluation OCR automatique supplémentaire, à un codage vidéo supplémentaire pour une évaluation utilisant les résultats de l'évaluation OCR automatique supplémentaire.

6. Dispositif de reconnaissance d'informations de distribution sur des envois, constitué
- d'un dispositif pour l'obtention d'images d'envois (120) ;
- d'un dispositif pour l'évaluation OCR automatique d'informations de distribution y compris une recherche d'informations de distribution (130) ;
- d'un dispositif pour le codage vidéo des informations de distribution avec au moins un poste de codage vidéo (200) avec dispositif d'entrée et écran ;
- un contrôleur d'image (170) pour la production d'une grille et pour la représentation superposée avec l'image de la surface d'envoi contenant l'information de distribution sur l'écran du poste de codage vidéo, le contrôleur d'image comportant les fonctions suivantes :
• production de la grille de telle sorte que la grille correspond à la division du pavé numérique du clavier ;
• production d'un extrait d'image, constitué du segment d'image qui a été entré manuellement au moyen d'un seul actionnement de la touche correspondant au segment d'image concerné, et de zones limitrophes vers tous les segments voisins et commande du transfert de ces données d'image vers le dispositif destiné à l'évaluation OCR automatique (130) des informations de distribution et, en cas d'évaluation automatique équivoque, à la représentation de l'extrait d'image agrandi sur l'écran du poste de codage vidéo (200) avec un alignement, corrigé en orientation et en position, de l'information.

7. Dispositif selon la revendication 6, dans lequel le contrôleur d'image (170) est conçu de telle sorte que des informations de distribution qui n'ont pas été évaluées sans équivoque par le codage vidéo sont envoyées, en utilisant les résultats du codage vidéo, au dispositif destiné à l'évaluation OCR automatique (130) en vue d'une évaluation supplémentaire.
